# EUROPÄISCHE PATENTSCHRIFT

(11) **EP 3 869 241 B1**
(45) Veröffentlichungstag und Bekanntmachung des Hinweises auf die Patenterteilung: **26.10.2022**
(21) Anmeldenummer: 20198591.8
(22) Anmeldetag: 28.09.2020
(51) Int. Cl.: G01V 8/12, G01V 8/20

(54) **LICHTSCHRANKENANORDNUNG**
LIGHT BARRIER DEVICE
AGENCEMENT DE BARRIÈRES LUMINEUSES

(30) Priorität: 18.02.2020 DE 202020100872 U
(43) Veröffentlichungstag der Anmeldung: 25.08.2021
(73) Patentinhaber: Leuze electronic GmbH + Co. KG, 73277 Owen/Teck (DE)
(72) Erfinder: Hörderich, Johann, 82291 Mammendorf (DE)
(74) Vertreter: Ruckh, Rainer Gerhard

(56) Entgegenhaltungen:
- EP-A1- 3 244 237
- DE-A1- 4 224 784
- DE-A1-102005 016 556
- DE-A1-102017 122 604
- DE-C1- 19 611 195
- JP-B2- 5 813 982

## Beschreibung

Die Erfindung betrifft eine Lichtschrankenanordnung.

Eine derartige Lichtschrankenanordnung kann im einfachsten Fall von einer einzelnen Lichtschranke mit nur einem Lichtimpulse emittierenden Sender und einem Lichtimpulse empfangenden Empfänger gebildet sein. Der Sender und der Empfänger sind an gegenüberliegenden Rändern eines Überwachungsbereichs angeordnet. In einer Auswerteeinheit werden die Empfangssignale zur Generierung eines Objektfeststellungssignals in Form eines binären Schaltsignals ausgewertet. Bei freiem Überwachungsbereich treffen die Lichtimpulse ungehindert auf den Empfänger, sodass in der Auswerteeinheit ein Schaltsignal mit dem Schaltzustand "freier Überwachungsbereich" generiert wird. Dringt ein Objekt in den Überwachungsbereich ein, werden die Lichtimpulse durch das Objekt unterbrochen und gelangen nicht mehr oder nur teilweise zum Empfänger. Dementsprechend wird in der Auswerteeinheit das Schaltsignal "Objekt vorhanden" generiert.

Generell besteht bei der Lichtschrankenanordnung, auf welche sich die Erfindung bezieht, keine elektrische Verbindung zwischen Sender und Empfänger. Vielmehr werden der Sender und Empfänger auf optischem Weg über die Lichtimpulse des Senders synchronisiert.

Die Lichtschrankenanordnung kann auch mehrere Paare von Sendern und Empfängern aufweisen, wobei die Lichtschrankenanordnung insbesondere als Lichtvorhang bzw. Lichtgitter ausgebildet sein kann.

Die EP 2 071 363 A2 betrifft ein Verfahren zum Betrieb eines Lichtgitters mit einer eine Anzahl von Sendelichtstrahlen emittierenden Sendern aufweisenden Sendereinheit und mit einer von der Sendereinheit elektrisch entkoppelten, eine Anzahl von Empfängern aufweisenden Empfängereinheit, wobei jeweils ein Sender mit einem Empfänger eine Strahlachse bildet und die Sender und Empfänger der einzelnen Strahlachsen zur Erfassung von Objekten in einem Überwachungsbereich zyklisch einzeln nacheinander aktiviert werden. Ein aktivierter Sender emittiert Sendelichtstrahlen in Form von wenigstens eine Pulsgruppe bildenden Pulsen und anhand einer Strahlachse erfolgt die Synchronisierung aller Strahlachsen des Lichtgitters. Die vom Sender dieser Strahlachse emittierten Pulse unterscheiden sich hinsichtlich wenigstens einer Kenngröße in Form der Breiten der Pulse oder in Form der Pausen oder Abstände zwischen den Pulsen von den Pulsen der weiteren Strahlachsen.

Gegenüber Lichtgittern, die Einzelpulse aussenden, ergibt sich in diesem Fall eine erhöhte Störsicherheit des Lichtgitters gegen Fremdlichteinstrahlung und insbesondere auch eine erhöhte Unempfindlichkeit gegenüber gegenseitigen Beeinflussungen zweier dicht nebeneinander angeordneter Lichtgitter, bei welchen die Gefahr besteht, dass Sendelichtstrahlen, die von den Sendern eines Lichtgitters emittiert werden, in einem Empfänger des zweiten Lichtgitters eingestrahlt werden. Durch die Verwendung mehrerer Pulse pro Pulsgruppe oder mehrerer Pulsgruppen, die von den Sendern der Lichtgitter emittiert werden, kann eine große Anzahl unterschiedlicher Folgen von Pulsen oder Pulsgruppen generiert werden, so dass in den Lichtgittern eindeutig identifizierbar ist, ob die Sendelichtstrahlen eines Senders korrekt vom zugeordneten Empfänger empfangen werden oder nicht.

Die EP 3 244 237 A1 betrifft einen optischen Sensor mit wenigstens einem Sender, wenigstens einem Empfänger und einer Datenauswerteeinheit. In der Datenauswerteeinheit wird anhand von am Ausgang des Empfängers anstehenden Empfangssignalen geprüft, ob eine eine Codierung bildende Folge von vom Sender emittierten Lichtpulsen im Empfänger registriert wird. Abhängig hiervon wird ein binäres Schaltsignal generiert. Eine Synchronisationseinheit ist vorgesehen, mittels derer der Sender und Empfänger zeitlich synchron innerhalb vorgegebener Zyklen aktiviert sind. Die vom Sender emittierten Lichtpulse sind in verschiedenen Zyklen zueinander invertiert und/oder zeitlich verschoben. Eine Fremdlichtauswerteeinheit ist vorgesehen, welche zur Erfassung von Fremdlicht innerhalb eines Zyklus nur in den Zeitintervallen, in welchen vom Sender keine Lichtpulse emittiert werden, die Empfangssignale des Empfängers auswertet.

Die DE 10 2005 016 556 A1 betrifft ein Verfahren zum Betrieb eines optoelektronischen Sensors, insbesondere einer Lichtschranke, bei dem
- ein Lichtsender einen zeitlichen Abstand aufweisende Lichtsignale in Richtung eines Überwachungsbereichs aussendet, wobei zumindest einige der Lichtsignale jeweils aus mehreren aufeinander folgenden Einzelimpulsen bestehen,
- ein Lichtempfänger die ausgesandten Lichtsignale empfängt und
- eine Auswerteeinheit aus den empfangenen Lichtsignalen generierte Empfangssignale verarbeitet und in Abhängigkeit vom Auswerteergebnis ein Gegenstandsfeststellungssignal abgibt.

Bei diesem Verfahren werden in regelmäßiger Reihenfolge mehrere Lichtsignale ausgesandt, wobei die Verläufe der jeweiligen Empfangssignale in unterschiedlicher Art und Weise ausgewertet werden. Ferner betrifft die Erfindung einen optoelektronischen Sensor, welcher zur Durchführung des genannten Verfahrens geeignet ist

Die DE 10 2017 122 604 A1 betrifft eine Anordnung von photoelektrischen Sensoren. Die lichtemittierende Einheit weist eine Vielzahl von Lichtemissionsmustern auf und emittiert Licht in einem der Lichtemissionsmuster. Eine lichtempfangende Einheit weist eine Vielzahl von Lichtrezeptionsmustern auf, welche die gleichen Pulsmuster aufweisen wie die Vielzahl von jeweiligen Lichtemissionsmustern, und detektiert einfallendes Licht, indem sie eines der Lichtrezeptionsmuster verwendet. Eine Pulsgruppenperiode des ersten Lichtemissionsmusters ist so eingestellt, dass sie kürzer ist als ein Flankenintervall einer zweiten Pulsgruppe. Eine Pulsgruppenperiode des zweiten Lichtemissionsmusters ist so eingestellt, dass sie kürzer ist als ein Flankenintervall einer dritten Pulsgruppe.

Die DE 42 24 784 A1 betrifft ein Verfahren zum Betrieb von Lichtschranken, Lichtgittern oder Lichtvorhängen. Bei diesem Verfahren werden innerhalb eines ersten Zeitfensters mindestens zwei Impulsgruppen codierten Lichtes ausgesandt, die in einem zweiten bzw. einem dritten Zeitfenster liegen. Ein Empfänger prüft, ob mindestens eine der empfangenen Impulsgruppen einen gültigen Code aufweist. Die zweiten und dritten Zeitfenster sind innerhalb des ersten Zeitfensters angeordnet, liegen zu diesem jedoch asymmetrisch und in nicht-harmonischem Abstand zueinander. Hierdurch werden Störimpulse von Fremdlichtquellen ausgeblendet.

Die DE 196 11 195 C1 betrifft ein Verfahren zum Betrieb einer Lichtschrankenanordnung. Zum störfreien Betrieb von Lichtschranken bei Beeinflussung durch eine Lichtschranke gleicher oder ähnlicher Bauart sendet jeder Sender Lichtstrahlen in Form von Doppelimpulsen bestehend aus zwei Impulsgruppen aus. Jeder Empfänger bewertet einen Lichtstrahl des zugehörigen Senders dann als korrekt empfangen, wenn mindestens eine der beiden Impulsgruppen eines Doppelimpulses als gültig erkannt wurde. Die Dauer der Impulsgruppen der Doppelimpulse und die Pausen zwischen diesen sind so festgelegt, dass höchstens eine Impulsgruppe eines Doppelimpulses des einen Senders von einer Impulsgruppe eines Doppelimpulses des anderen Senders überlagert wird.

Der Erfindung liegt die Aufgabe zugrunde, eine Lichtschrankenanordnung mit verbesserter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung mit wenigstens einem Lichtimpulse emittierenden Sender und wenigstens einem Lichtimpulse empfangenden Empfänger, deren Betrieb optisch synchronisiert ist, sodass der Sender und der Empfänger innerhalb vorgegebener Scans zyklisch aktiviert sind, sowie einer Auswerteeinheit, in welcher abhängig von Empfangssignalen ein Objektfeststellungssignal generiert wird. Zur Generierung des Objektfeststellungssignals in der Auswerteeinheit werden die Lichtimpulse wenigstens zweier verschiedener Übertragungskanäle bildender Scans ausgewertet, wobei die vom Sender in den beiden Scans emittierten Lichtimpulse unterschiedlich sind. Der oder jeder Sender sendet innerhalb eines der beiden Scans mindestens zwei Pulsfolgen in einem definierten zeitlichen Abstand und sendet innerhalb des zweiten Scans wenigstens eine Pulsfolge weniger als innerhalb des ersten Scans aus. Die Pulsfolgen der verschiedenen Überwachungskanäle sind zeitlich so angeordnet, dass immer mindestens eine Pulsfolge bei mindestens zwei aufeinanderfolgenden Scans von den Pulsfolgen eines anderen Übertragungskanals nicht gestört werden kann.

Mit den verschiedenen Scans werden zeitversetzte, unterschiedliche Übertragungskanäle bereitgestellt, in denen auf unterschiedliche Weise Lichtimpulse emittiert werden. Jeder Übertragungskanal trägt zur Generierung des Objektfeststellungssignals bei, das vorteilhaft als binäres Schaltsignal ausgebildet ist, dessen Schaltzustände angeben, ob ein Objekt in dem von dem oder den Sendern und dem oder den Empfängern begrenzten Überwachungsbereich vorhanden ist oder nicht.

Durch die Auswertung mehrerer Übertragungskanäle zur Generierung des Objektfeststellungssignals wird eine hohe Störfestigkeit der Lichtschrankenanordnung erzielt. Insbesondere können damit Störungen aufgrund gegenseitiger Beeinflussungen mehrerer benachbarter Lichtschrankenanordnungen unterbunden werden. Die Lichtschrankenanordnungen können damit in einem Parallelbetrieb betrieben werden, ohne dass Funktionsstörungen dieser Lichtschrankenanordnungen auftreten.

Die Lichtschrankenanordnung kann dabei in Form einer einzelnen Lichtschranke ausgebildet sein. Alternativ kann die Lichtschrankenanordnung mehrere Paare von Sendern und Empfängern aufweisen.

Jeder Sender und der diesem zugeordnete Empfänger bildet eine Strahlachse der Lichtschrankenanordnung.

Insbesondere kann die Lichtschrankenanordnung einen Lichtvorhang ausbilden, bei dem mehrere Sender in einer Sendereinheit an einem ersten Rand des Überwachungsbereichs und mehrere Empfänger in einer Empfängereinheit am gegenüberliegenden, zweiten Rand des Überwachungsbereichs angeordnet sind.

Insbesondere bei mehrstrahligen Systemen mit Lichtvorhängen ergibt sich durch das Vorsehen zweier oder mehrerer Übertragungskanäle eine Verkürzung der Gesamtreaktionszeit.

Dies beruht darauf, dass die für eine Strahlachse benötigte Zeit im Vergleich zu bekannten Lichtvorhängen, die zur Vermeidung gegenseitiger Beeinflussungen lange und komplexe Pulsfolgen von Lichtimpulsen aussenden müssen, reduziert werden kann, wodurch im Ergebnis die Gesamtreaktionszeit der Lichtschrankenanordnung reduziert werden kann.

Besonders vorteilhaft werden mit den verschiedenen Scans unterschiedliche parametrierbare Übertragungskanäle bereitgestellt.

Ein Benutzer kann dann mit einer geeigneten Parametrierung von Übertragungskanälen mehrerer Lichtschrankenanordnungen, die in enger räumlicher Beziehung eingesetzt werden sollen, gegenseitige Beeinflussungen dieser Lichtschrankenanordnungen sicher vermeiden.

Gemäß einer vorteilhaften Ausführungsform sendet der oder jeder Sender innerhalb eines der beiden Scans mindestens zwei Pulsfolgen in einem definierten zeitlichen Abstand und innerhalb des zweiten Scans wenigstens eine Pulsfolge weniger als innerhalb des ersten Scans aus.

Eine Unterbrechung der Übertragungskanäle wird somit durch die Erfassung der Anzahl der Pulsfolgen innerhalb der jeweiligen Scans erkannt.

Vorteilhaft gilt dabei, dass in der Auswerteeinheit ein freier Überwachungsbereich als erkannt gilt, wenn für den oder jeden Sender und dessen zugeordneten Empfänger eine Mindestanzahl von Pulsfolgen innerhalb der beiden Scans fehlerfrei erkannt wird.

Als Minimalanforderung kann definiert werden, dass nur eine der Pulsfolgen in den beiden Scans fehlerfrei erfasst werden muss, um damit ein positives Ergebnis für einen freien Überwachungsbereich zu erhalten. Dies stellt ein äußerst fehlertolerantes System dar, da ein Vorhandensein geringer Störeffekte toleriert wird.

Trotz dieser vorhandenen Störeinflüsse wird die fehlerfreie Erkennung von mindestens einer der Pulsfolgen in beiden Scans ermöglicht, um mit hinreichender Fehlersicherheit einen freien Überwachungsbereich nachzuweisen.

Da sich die Anzahlen der Pulsfolgen innerhalb der die Übertragungskanäle bildenden Scans unterscheiden, kommt es auf die Ausprägung der Pulsfolgen selbst nicht mehr an. Dies hat den Vorteil, dass die Pulsfolgen beliebig gewählt werden können. Insbesondere können kurze Pulsfolgen gewählt werden, die zu einer kurzen Gesamtreaktionszeit führen.

Gemäß einer ersten Variante sind die Pulsfolgen innerhalb der Scans identisch.

Gemäß einer zweiten Variante sind die Pulsfolgen innerhalb der Scans unterschiedlich.

Beispielsweise unterscheiden sich die Pulsfolgen hinsichtlich der Anzahl der Pulse, der Pulsdauern, der Pulspausen oder der Puls-Pausen-Verhältnisse.

Erfindungsgemäß sind die Pulsfolgen verschiedener Übertragungskanäle zeitlich so angeordnet, dass immer mindestens eine Pulsfolge bei mindestens zwei aufeinanderfolgenden Scans von den Pulsfolgen eines anderen Übertragungskanals nicht gestört werden kann.

Gemäß einer vorteilhaften Ausführungsform ist die Lichtschrankenanordnung als Sicherheitssensor ausgebildet. Der Sicherheitssensor weist einen fehlersicheren Aufbau auf, das heißt er umfasst Mittel zur Aufdeckung von Fehlern in der Signalgenerierung und Signalauswertung. Beispielsweise kann ein fehlersicherer Aufbau des Sicherheitssensors durch eine redundante Auswerteeinheit in Form von zwei sich gegenseitig zyklisch überwachenden Rechnereinheiten realisiert werden.

Die Erfindung wird im Folgenden anhand der Zeichnungen erläutert. Es zeigen:
- Figur 1:: Ausführungsbeispiel der erfindungsgemäßen Lichtschrankenanordnung in Form einer Lichtschranke.
- Figur 2:: Zeitdiagramm des Senderbetriebs der Lichtschranke gemäß Figur 1.
- Figur 3:: Ausführungsbeispiel der erfindungsgemäßen Lichtschrankenanordnung in Form eines Lichtvorhangs.
- Figur 4:: Ausführungsbeispiel des Senderbetriebs des Lichtvorhangs gemäß Figur 3.

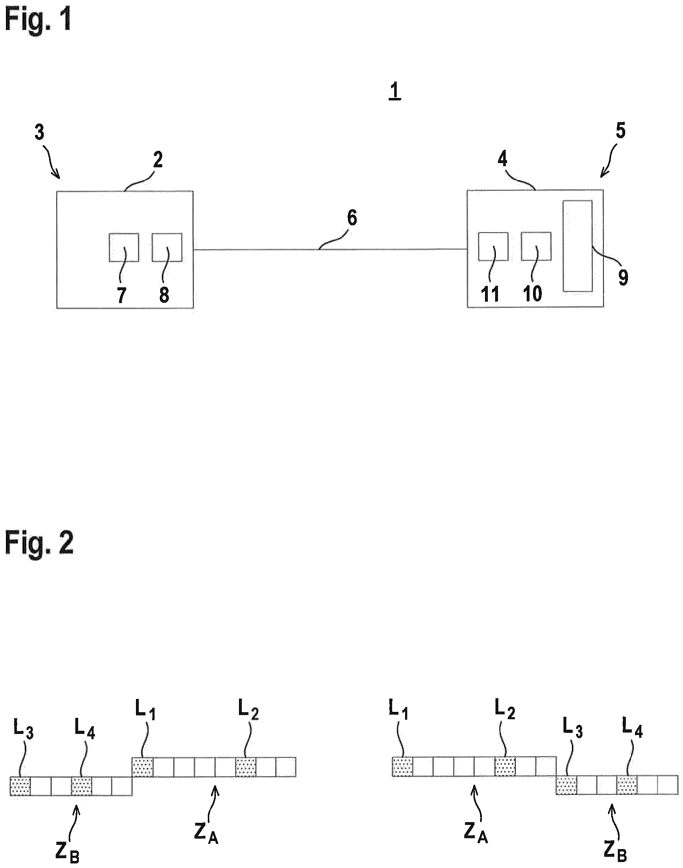

Figur 1 zeigt ein Ausführungsbeispiel der erfindungsgemäßen Lichtschrankenanordnung 1 in Form einer Lichtschranke.

Die Lichtschranke umfasst eine in einem ersten Gehäuse 2 angeordnete Sendereinheit 3 und eine in einem zweiten Gehäuse 4 angeordnete Empfängereinheit 5, die an gegenüberliegenden Rändern eines Überwachungsbereichs angeordnet sind.

In der Sendereinheit 3 ist ein Sendelichtstrahlen 6 emittierender Sender 7 mit einer nachgeordneten Sendeoptik 8 vorgesehen. Der Sender 7 kann in Form einer Leuchtdiode ausgebildet sein. In der Empfängereinheit 5 sind eine Auswerteeinheit 9 sowie ein Empfänger 10 in Form einer Photodiode mit einer vorgeordneten Empfangsoptik 11 vorgesehen.

In der Auswerteeinheit 9 werden die Empfangssignale zur Generierung eines Objektfeststellungssignals ausgewertet, das über einen nicht dargestellten Ausgang ausgegeben wird. Im vorliegenden Fall ist das Objektfeststellungssignal als binäres Schaltsignal ausgebildet, dessen Schaltzustände angeben, ob ein Objekt 12 im Überwachungsbereich vorhanden ist. Bei freiem Überwachungsbereich gelangen die Sendelichtstrahlen 6 ungehindert zum Empfänger 10, während bei einem Objekteingriff die Sendelichtstrahlen 6 nicht mehr oder nicht mehr vollständig zum Empfänger 10 geführt sind. Dies wird in der Auswerteeinheit 9 durch die Auswertung der Empfangssignale erfasst.

Die Lichtschranke ist im vorliegenden Fall als Sicherheitssensor ausgebildet. Hierzu weist die Auswerteeinheit 9 einen redundanten Aufbau in Form zweier sich zyklisch überwachender Rechnereinheiten auf.

Der Sender 7 emittiert Sendelichtstrahlen 6 in Form von Lichtimpulsen. Dabei werden vom Sender 7 zyklisch innerhalb vorgegebener Scans Pulsfolgen von Lichtimpulsen emittiert.

Die Sendereinheit 3 und die Empfängereinheit 5 sind nicht über elektrische Leitungen verbunden. Daher erfolgt die Synchronisierung der Sender- und Empfängereinheit in bekannter Weise auf optischem Weg über die Lichtimpulse des Senders 7.

Erfindungsgemäß emittiert der Sender 7 jeweils in zwei aufeinanderfolgenden Scans 1, 2 wie in Figur 2 dargestellt, unterschiedliche Pulsfolgen von Lichtimpulsen, wobei diese zwei Scans 1, 2 fortlaufend wiederholt werden.

Im Scan 1 emittiert der Sender 7 zeitversetzt zwei identische Pulsfolgen, die jeweils von zwei Einzel-Lichtimpulsen L₁, L₂ innerhalb eines vorgegebenen ersten Zeitrasters Z_{A} emittiert werden.

Im Scan 2 emittiert der Sender 7 zeitversetzt zwei identische Pulsfolgen, die jeweils von zwei Einzel-Lichtimpulse L₃, L₄ innerhalb eines vorgegebenen zweiten Zeitrasters Z_{B} emittiert werden.

Die Pulsfolgen des ersten und zweiten Scans weisen unterschiedliche Puls-Pausen auf und sind so unterscheidbar. Alternativ können sich die Pulsfolgen auch durch die Pulsdauern oder Puls-Pausen-Verhältnisse unterscheiden.

Mit dem Scan 1, 2 oder generell mit unterschiedlichen Scans der erfindungsgemäßen Lichtschrankenanordnung 1 werden unterschiedliche Übertragungskanäle bereitgestellt, die so gewählt sind, dass bei vorhandenen Störsendern, insbesondere Sendern anderer Lichtschrankenanordnungen, nicht alle Pulsfolgen beider Scans 1, 2 gestört werden, was insbesondere durch eine geeignete Parametrierung der Pulsfolgen in den Scans 1, 2 erreicht wird.

Dementsprechend erfolgt die Auswertung in der Auswerteeinheit 9 derart, dass ein freier Überwachungsbereich bereits dann als erkannt gilt, wenn wenigstens eine Pulsfolge eines Scans 1 oder 2 vollständig erkannt wird. Dann nimmt das Schaltsignal den Schaltzustand "freier Überwachungsbereich" ein. Ansonsten nimmt das Schaltsignal den Schaltzustand "Objekt vorhanden" ein.

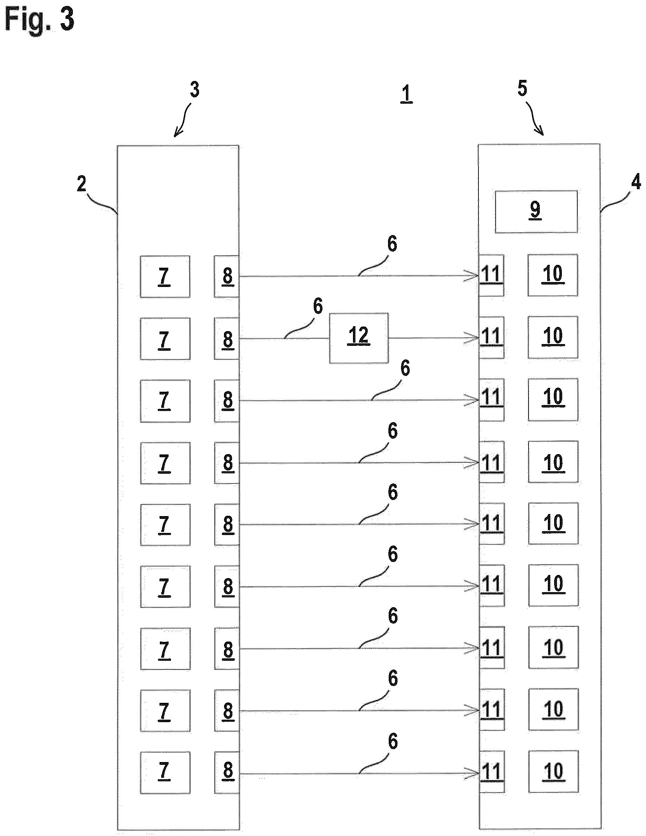

Figur 3 zeigt eine Lichtschrankenanordnung 1 in Form eines Lichtvorhangs.

Der Lichtvorhang weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet, wobei die Sender 7 vorzugsweise äquidistant angeordnet sind. Zur Strahlformung der Sendelichtstrahlen 6 ist jedem Sender 7 eine Sendeoptik 8 vorgeordnet.

Die optischen Achsen der im Überwachungsbereich geführten Sendelichtstrahlen 6 verlaufen parallel zueinander in der Ebene des Überwachungsbereichs.

Die Sender 7 werden von einer nicht dargestellten Sender-Steuereinheit angesteuert. Im vorliegenden Ausführungsbeispiel werden die Sender 7 im Pulsbetrieb betrieben. Die einzelnen Sender 7 emittieren Sendelichtstrahlen 6 in Form von Pulsfolgen, wobei die Taktung über die Sender-Steuereinheit erfolgt. Dabei werden innerhalb eines Scans die Sender 7 entsprechend ihrer Reihenfolge in der Sendereinheit 3 in einer vorgegebenen Scanrichtung nacheinander aktiviert.

Die Empfängereinheit 5 weist eine Anordnung von identisch ausgebildeten, nebeneinander liegend angeordneten Empfängern 10 auf. Die Empfänger 10 bestehen vorzugsweise jeweils aus einer Fotodiode und sind äquidistant angeordnet. Jedem Empfänger 10 ist eine Empfangsoptik 11 vorgeordnet. Dabei liegt jeweils ein Empfänger 10 einem Sender 7 der Sendereinheit 3 gegenüber. Die Strahlformung der Sendelichtstrahlen 6 ist im vorliegenden Fall derart gewählt, dass bei freiem Strahlengang die Sendelichtstrahlen 6 eines Senders 7 jeweils nur auf den gegenüberliegend angeordneten Empfänger 10 treffen. Jeder Sender 7 und der diesem zugeordnete Empfänger 10 bildet eine Strahlachse des Lichtgitters 1. Die Gesamtheit der Strahlachsen des Lichtgitters 1 definiert den mit diesem erfassten Überwachungsbereich. Die Synchronisierung des Betriebs der Sender 7 und Empfänger 10 erfolgt auf optischem Weg über die Lichtimpulse wenigstens einer Strahlachse.

Die Empfänger 10 werden über die Auswerteeinheit 9 gesteuert. Weiter werden die am Ausgang der Empfänger 10 anstehenden Empfangssignale in der Auswerteeinheit 9 ausgewertet. Auch in diesem Fall wird in der Auswerteeinheit 9 abhängig von den Empfangssignalen der Empfänger 10 ein Obj ektfeststellungssignal in Form eines binären Schaltsignals generiert. Bei freiem Strahlengang des Lichtgitters 1 treffen die Sendelichtstrahlen 6 ungehindert auf die zugeordneten Empfänger 10, sodass dann das Schaltsignal den Schaltzustand "freier Überwachungsbereich" einnimmt.

Ist, wie in Figur 3 dargestellt, wenigstens eine Strahlachse durch den Eingriff eines Objekts 12 unterbrochen, nimmt das Schaltsignal den Schaltzustand "Objekt vorhanden" ein.

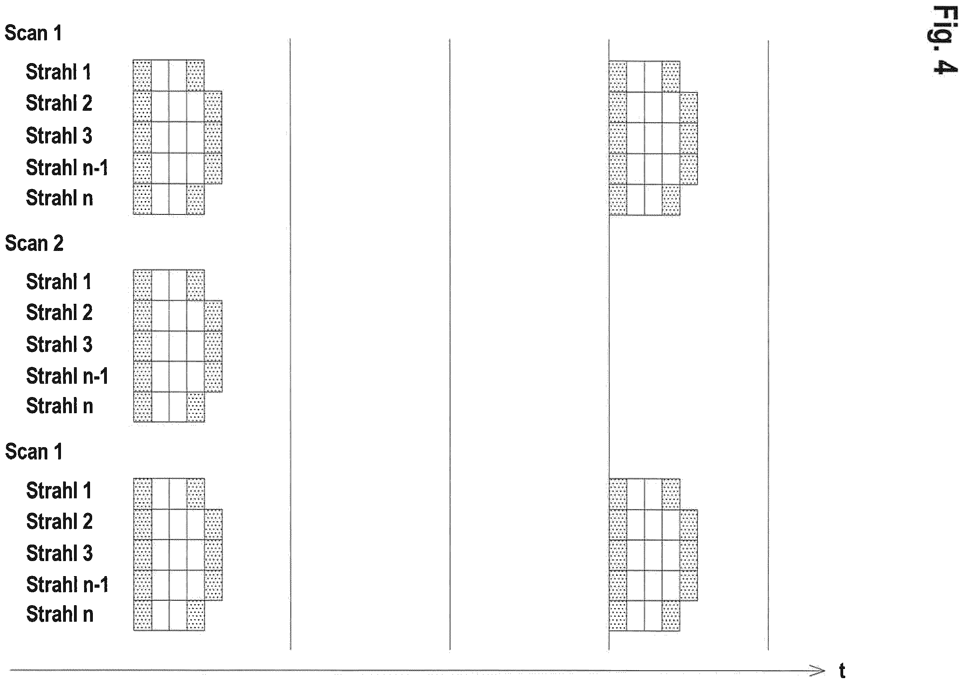

Figur 4 zeigt den Senderbetrieb für den Lichtvorhang gemäß Figur 3. Die Sender 7 des Lichtvorhangs werden in zwei unterschiedlichen Scans 1, 2 zyklisch nacheinander aktiviert. Dabei sind in Figur 4 mit Strahl 1, 2, 3 ... n-1, n die Pulsfolgen der Sender 7 der einzelnen Strahlachsen 1, 2, 3 ... n-1, n des Lichtvorhangs gemäß Figur 3 bezeichnet.

Die Sender 7 der ersten und n-ten Strahlachse emittieren gleiche Pulsfolgen mit zwei Lichtimpulsen, die übrigen Sender 7 emittieren auch gleiche Pulsfolgen mit zwei Lichtimpulsen, die sich hinsichtlich der Puls-Pausen von den Pulsfolgen des ersten und n-ten Senders 7 unterscheiden.

Wie aus Figur 4 ersichtlich emittieren die Sender 7 aller Strahlachsen während Scan 1 zwei identische, zeitlich versetzte Pulsfolgen, wogegen während Scan 2 die Sender 7 aller Strahlachsen nur eine Pulsfolge emittieren.

Dadurch werden mit den Scans 1, 2 zwei unterschiedliche Übertragungskanäle bereitgestellt, die so angepasst sind, dass Störlichtquellen, insbesondere benachbarte Lichtschrankenanordnungen nicht beide Übertragungskanäle gleichzeitig stören.

In der Auswerteeinheit 9 erfolgt eine Signalauswertung derart, dass ein freier Überwachungsbereich als erkannt gilt, wenn wenigstens eine der Pulsfolgen innerhalb Scan 1 oder Scan 2 erkannt wird. Dann wird in der Auswerteeinheit 9 ein Schaltsignal mit dem Schaltzustand "freier Überwachungsbereich" generiert. Ansonsten nimmt das Schaltsignal den Schaltzustand "Objekt vorhanden" ein.

### B ezugszei chenli ste

- (1): Lichtschrankenanordnung
- (2): Gehäuse, erstes
- (3): Sendereinheit
- (4): Gehäuse, zweites
- (5): Empfängereinheit
- (6): Sendelichtstrahlen
- (7): Sender
- (8): Sendeoptik
- (9): Auswerteeinheit
- (10): Empfänger
- (11): Empfangsoptik
- (12): Objekt

- L₁ - L₄: Einzel-Lichtimpuls
- Z_{A}, Z_{B}: Zeitraster

## Patentansprüche

1. Lichtschrankenanordnung (1) mit wenigstens einem Lichtimpulse emittierenden Sender (7) und wenigstens einem Lichtimpulse empfangenden Empfänger (10), deren Betrieb optisch synchronisiert ist, sodass der Sender (7) und der Empfänger (10) innerhalb vorgegebener Scans zyklisch aktiviert sind, und mit einer Auswerteeinheit (9), in welcher abhängig von Empfangssignalen ein Objektfeststellungssignal generiert wird, wobei zur Generierung des Objektfeststellungssignals in der Auswerteeinheit (9) die Lichtimpulse wenigstens zweier verschiedener Übertragungskanäle bildender Scans ausgewertet werden, wobei die vom Sender (7) in den beiden Scans emittierten Lichtimpulse unterschiedlich sind, **dadurch gekennzeichnet, dass** der oder jeder Sender (7) innerhalb eines der beiden Scans mindestens zwei Pulsfolgen in einem definierten zeitlichen Abstand sendet, und dass der oder jeder Sender (7) innerhalb des zweiten Scans wenigstens eine Pulsfolge weniger als innerhalb des ersten Scans aussendet, wobei die Pulsfolgen verschiedener Übertragungskanäle zeitlich so angeordnet sind, dass immer mindestens eine Pulsfolge bei mindestens zwei aufeinanderfolgenden Scans von den Pulsfolgen eines anderen Übertragungskanals nicht gestört werden kann.

2. Lichtschrankenanordnung (1) nach Anspruch 1, **dadurch gekennzeichnet, dass** diese mehrere Paare von Sendern (7) und Empfängern (10) aufweist.

3. Lichtschrankenanordnung (1) nach Anspruch 2, **dadurch gekennzeichnet, dass** diese einen Lichtvorhang ausbildet.

4. Lichtschrankenanordnung (1) nach einem der Ansprüche 1 bis 3, **dadurch gekennzeichnet, dass** die von den Sendern (7) emittierten Pulsfolgen parametrierbar sind.

5. Lichtschrankenanordnung (1) nach einem der Ansprüche 1 bis 4, **dadurch gekennzeichnet, dass** die Pulsfolgen innerhalb der Scans identisch sind.

6. Lichtschrankenanordnung (1) nach einem der Ansprüche 1 bis 4, **dadurch gekennzeichnet, dass** die Pulsfolgen innerhalb der Scans unterschiedlich sind.

7. Lichtschrankenanordnung (1) nach Anspruch 6, **dadurch gekennzeichnet, dass** sich die Pulsfolgen hinsichtlich der Anzahl der Pulse, der Pulsdauern, der Pulspausen oder der Puls-Pausen-Verhältnisse unterscheiden.

8. Lichtschrankenanordnung (1) nach einem der Ansprüche 1 bis 7, **dadurch gekennzeichnet, dass** mit dieser ein Überwachungsbereich überwacht wird, wobei bei freiem Überwachungsbereich die von dem oder jedem Sender (7) emittierten Lichtimpulse ungehindert auf den jeweils zugeordneten Empfänger (10) treffen.

9. Lichtschrankenanordnung (1) nach Anspruch 8, **dadurch gekennzeichnet, dass** in der Auswerteeinheit (9) ein freier Überwachungsbereich als erkannt gilt, wenn für den oder jeden Sender (7) und dessen zugeordneten Empfänger (10) eine Mindestanzahl von Pulsfolgen innerhalb der beiden Scans fehlerfrei erkannt wird.

10. Lichtschrankenanordnung (1) nach einem der Ansprüche 1 bis 9, **dadurch gekennzeichnet, dass** diese ein Sicherheitssensor ist.

## Claims

1. A light barrier device (1) with at least one light pulse emitting transmitter (7) and at least one light pulse receiving receiver (10), the operation of which is optically synchronised so that the transmitter (7) and the receiver (10) are cyclically activated within predetermined scans, and having an evaluation unit (9) in which an object detection signal is generated as a function of received signals, the light pulses of at least two scans forming different transmission channels being evaluated in the evaluation unit (9) in order to generate the object detection signal, wherein the light pulses emitted by the transmitter (7) in the two scans are different, **characterised in that** said or each transmitter (7) transmits at least two pulse sequences at a defined time interval within one of the two scans, and **in that** said or each transmitter (7) transmits at least one pulse sequence less within the second scan than within the first scan, the pulse sequences of different transmission channels being arranged temporally in such a way that at least one pulse sequence in at least two successive scans cannot be interfered with by the pulse sequences of another transmission channel.

2. A light barrier device (1) according to claim 1, **characterised in that** it comprises several pairs of transmitters (7) and receivers (10).

3. A light barrier device (1) according to claim 2, **characterised in that** it forms a light curtain.

4. A light barrier device (1) according to one of the claims 1 to 3, **characterised in that** the pulse sequences emitted by the transmitters (7) can be parameterised.

5. A light barrier device (1) according to one of claims 1 to 4, **characterised in that** the pulse sequences within the scans are identical.

6. A light barrier device (1) according to one of claims 1 to 4, **characterised in that** the pulse sequences within the scans are different.

7. A light barrier device (1) according to claim 6, **characterised in that** the pulse sequences differ with regard to the number of pulses, the pulse duration, the pulse pauses or the pulse-pause ratios.

8. A light barrier device (1) according to one of the claims 1 to 7, **characterised in that** a surveillance area is monitored with said device, wherein the light pulses emitted by said or each transmitter (7) strike the respectively associated receiver (10) unhindered incase the surveillance area is clear.

9. A light barrier device (1) according to claim 8, **characterised in that** a clear surveillance area is deemed to be recognised in the evaluation unit (9) if a minimum number of pulse sequences within the two scans is recognised without error for said or each transmitter (7) and its associated receiver (10).

10. A light barrier device (1) according to one of the claims 1 to 9, **characterised in that** it is a safety sensor.

## Revendications

1. Agencement de barrières lumineuses (1) avec au moins un émetteur (7) émettant des impulsions lumineuses et au moins un récepteur (10) recevant des impulsions lumineuses, dont le fonctionnement est synchronisé optiquement de sorte que l'émetteur (7) et le récepteur (10) sont activés de manière cyclique à l'intérieur de balayages prédéterminés, et avec une unité d'évaluation (9) dans laquelle un signal de détection d'objet est généré en fonction des signaux reçus, les impulsions lumineuses d'au moins deux balayages formant des canaux de transmission différents étant évaluées dans l'unité d'évaluation (9) pour générer le signal de détection d'objet, les impulsions lumineuses émises par l'émetteur (7) dans les deux balayages étant différentes, **caractérisé en ce que** ledit ou chaque émetteur (7) émet au moins deux séquences d'impulsions à un intervalle de temps défini à l'intérieur de l'un des deux balayages, et **en ce que** ledit ou chaque émetteur (7) émet au moins une séquence d'impulsions de moins à l'intérieur du deuxième balayage qu'à l'intérieur du premier balayage, les séquences d'impulsions de différents canaux de transmission étant disposées tempo-rellement de telle sorte qu'au moins une séquence d'impulsions dans au moins deux balayages successifs ne puisse pas être perturbée par les séquences d'impulsions d'un autre canal de transmission.

2. Agencement de barrières lumineuses (1) selon la revendication 1, **caractérisé en ce qu'**il comprend plusieurs paires d'émetteurs (7) et de récepteurs (10).

3. Agencement de barrières lumineuses (1) selon la revendication 2, **caractérisé en ce qu'**il forme un rideau lumineux.

4. Agencement de barrières lumineuses (1) selon l'une des revendications 1 à 3, **caractérisé en ce que** les séquences d'impulsions émises par les émetteurs (7) sont paramétrables.

5. Agencement de barrières lumineuses (1) selon l'une des revendications 1 à 4, **caractérisé en ce que** les séquences d'impulsions au sein des balayages sont identiques.

6. Agencement de barrières lumineuses (1) selon l'une des revendications 1 à 4, **caractérisé en ce que** les séquences d'impulsions au sein des balayages sont différentes.

7. Agencement de barrières lumineuses (1) selon la revendication 6, **caractérisé en ce que** les séquences d'impulsions diffèrent en ce qui concerne le nombre d'impulsions, la durée d'impulsion, les pauses d'impulsion ou les rapports impulsion-pause.

8. Agencement de barrières lumineuses (1) selon l'une des revendications 1 à 7, **caractérisé en ce qu'**une zone de surveillance est surveillée avec ledit dispositif, dans lequel les impulsions lumineuses émises par ledit ou chaque émetteur (7) atteignent le récepteur respectivement associé (10) sans entrave si la zone de surveillance est dégagée.

9. Agencement de barrières lumineuses (1) selon la revendication 8, **caractérisé en ce qu'**une zone de surveillance libre est considérée comme reconnue dans l'unité d'évaluation (9) si un nombre minimum de séquences d'impulsions dans les deux balayages est reconnu sans erreur pour ledit ou chaque émetteur (7) et son récepteur associé (10).

10. Agencement de barrières lumineuses (1) selon l'une des revendications 1 à 9, **caractérisé en ce qu'**il s'agit d'un capteur de sécurité.
